# FASCICULE DE BREVET EUROPEEN

(11) **EP 0 344 079 B1**
(45) Date de publication et mention de la délivrance du brevet: **07.01.1993**
(21) Numéro de dépôt: 89440034.0
(22) Date de dépôt: 27.04.1989
(51) Int. Cl.: A01D 78/10, A01D 69/00

(54) **Machine agricole comportant au moins un rotor entraîné en rotation durant le travail**
Landmaschine mit mindestens einem während der Arbeit angetriebenen Rechrad
Agricultural machine comprising at least one raking wheel rotatably driven during operation

(30) Priorité: 26.05.1988 FR 8807194
(43) Date de publication de la demande: 29.11.1989
(73) Titulaire: KUHN S.A., F-67700 Saverne (FR)
(72) Inventeur: Aron, Jérôme, Dossenheim-sur-Zinsel F-67330 Bouxwiller (FR)
(74) Mandataire: Andres, Jean-Claude

(56) Documents cités:
- EP-A- 0 063 531
- EP-A- 0 155 063
- EP-A- 0 165 191
- CH-A- 389 305
- DE-A- 1 655 950
- FR-A- 1 337 291
- FR-A- 2 399 201
- FR-A- 2 491 287
- FR-A- 2 509 117
- GB-A- 1 132 647

## Description

La présente invention se rapporte à une machine agricole en particulier pour la fenaison, comportant notamment un châssis supportant au moins un rotor entraîné en rotation durant le travail autour d'un axe sensiblement vertical, lequel entraînement s'effectue à partir de l'arbre de prise de force d'un tracteur.

Les machines de ce genre qui sont équipées d'un rotor pour andainer des végétaux couchés sur le sol doivent de plus en plus pouvoir être accouplées aussi bien à l'avant qu'à l'arrière des tracteurs. Lorsqu'un tel andaineur se situe à l'avant on peut accoupler une seconde machine, par exemple une presse ou une ensileuse, à l'arrière en vue de réaliser simultanément deux opérations. Un autre avantage du montage de l'andaineur à l'avant est que les roues du tracteur ne passent pas sur le fourrage étalé.

Cependant, une importante entrave à la généralisation des accouplements à l'avant des tracteurs provient du fait que les vitesses et les sens de rotation des arbres de prise de force avant diffèrent selon les modèles de tracteurs. Sur certains modèles lesdits arbres tournent à 1000 t/mn alors que sur d'autres modèles ils tournent à 540 t/mn. En sus, sur certains tracteurs les arbres de prise de force avant tournent vers la droite alors que sur d'autres ils tournent vers la gauche.

Les utilisateurs désireux de mettre leurs machines à l'avant des tracteurs sont obligés d'employer dans la plupart des cas des carters de réduction ou d'inversion ou parfois les deux à la fois. Ces carters doivent alors être placés entre l'arbre de prise de force et le rotor de la machine. Ces carters constituent des dispositifs indépendants d'un prix relativement élevé. De plus, il est nécessaire de les retirer des machines lorsqu'ils ne sont pas utilisés pour l'entraînement, ce qui oblige l'utilisateur de prévoir des emplacements pour les entreposer.

Enfin, de tels carters de réduction doivent aussi être employés pour l'entraînement de machines accouplées à l'arrière de tracteurs ne disposant que d'une prise de force arrière tournant à 1000 t/mn.

Sur une faucheuse, connue dans le brevet GB 1 132 647, l'entraînement des deux organes de coupe s'effectue par l'intermédiaire d'un boîtier de transmission. Ce boîtier est équipé d'une première roue dentée et d'une deuxième roue dentée qui engrènent constamment entre elles et d'une troisième roue dentée qui peut être amenée en prise avec la première roue dentée ou avec la deuxième roue dentée précitées, ladite première roue dentée étant liée à un premier arbre et ladite deuxième roue dentée étant liée à un deuxième arbre, chacun de ces arbres s'étendant hors du boîtier et pouvant être relié à l'arbre de prise de force du tracteur. En sus, chacun de ces arbres est relié à un des organes de coupe de la faucheuse. La première roue dentée et la deuxième roue dentée ont le même diamètre. La troisième roue dentée possède un diamètre plus petit et elle est montée sur un arbre dont chacune des extrémités peut être reliée à l'arbre de prise de force du tracteur. L'utilisation de cette troisième roue dentée permet de réduire la vitesse de rotation des organes de coupe et d'inverser leur sens de rotation. Pour déplacer cette troisième roue dentée en vue de la faire engrèner soit avec la première roue dentée, soit avec la deuxième roue dentée il est nécessaire de démonter la partie supérieure du boîtier et de la tourner de 180° avec ladite troisième roue dentée. En pratique, cette façon de procéder présente des inconvénients. L'opération est longue et demande beaucoup de vigilance pour éviter l'introduction dans le boîtier de corps étrangers tels que de la terre ou des brins d'herbe qui peuvent être collés contre ses parois.

La présente invention a notamment pour but de remédier aux inconvénients des dispositifs connus. Elle doit notamment proposer à un moindre coût une machine avec au moins un rotor pouvant être entraîné dans le bon sens et à la bonne vitesse à partir de n'importe quel arbre de prise de force avant ou arrière d'un tracteur.

A cet effet une importante caractéristique de l'invention consiste en ce que la première roue dentée et la deuxième roue dentée possèdent des diamètres et des nombres de dents différents et que la troisième roue dentée est munie d'un arbre de sortie qui est relié au rotor, laquelle troisième roue dentée est montée de manière excentrée dans un logement qui est guidé en rotation dans des alésages des parois du boîtier et qui peut être tourné dans ces alésages en vue d'amener la troisième roue dentée en prise avec la première roue dentée ou avec la deuxième roue dentée précitées.

La première roue dentée et la deuxième roue dentée ont avantageusement des nombres de dents qui diffèrent dans un rapport tel que lorsque la vitesse de rotation de l'une est de l'ordre de 1000 t/mn la vitesse de rotation de l'autre est d'environ 540 t/mn.

Cet agencement permet d'animer correctement le ou les rotors de la machine, qu'elle soit à l'avant ou à l'arrière du tracteur, avec des moyens simples. On peut en effet conserver pratiquement la même vitesse de rotation de la troisième roue dentée et par conséquent du ou des rotors, en reliant l'arbre de prise de force du tracteur à l'arbre d'entrée de la roue dentée ayant le plus petit diamètre s'il tourne à 1000 t/mn et inversement, à l'arbre d'entrée de la roue dentée qui possède le plus grand diamètre s'il tourne à 540 t/mn.

D'autre part, quel que soit le sens de rotation de l'arbre de prise de force, il est possible de conserver le même sens de rotation de la troisième roue dentée et donc du ou des rotors. Pour cela, il suffit de mettre cette troisième roue dentée en prise directe avec la roue dentée dont l'arbre d'entraînement est relié à l'arbre de prise de force si le sens de rotation de ce dernier doit être inversé, ou bien de la mettre en prise avec l'autre roue dentée si le sens de rotation donné par l'arbre de prise de force doit être conservé. Dans ce dernier cas la seconde roue dentée modifie le sens de rotation de la troisième roue dentée mais pas sa vitesse de rotation. Ledit déplacement de la troisième roue dentée se fait à partir de l'extérieur du boîtier. Il ne nécessite donc pas l'ouverture de ce dernier.

Selon une autre caractéristique de l'invention, un limiteur de couple est prévu sur l'arbre de transmission reliant l'arbre de sortie de la troisième roue dentée du boîtier précité au rotor. Grâce à cette disposition le limiteur ne subit aucun changement de sens ou de vitesse de rotation qui pourrait altérer son fonctionnement.

D'autres caractéristiques de l'invention ressortiront des revendications et de la description ci-après d'un exemple de réalisation non limitatif de l'invention avec référence aux dessins annexés dans lesquels :
- la figure 1 représente une vue de côté, en coupe partielle, d'une machine selon l'invention,
- la figure 2 représente à plus grande échelle une vue de face du boîtier de transmission dans une première position,
- la figure 3 représente une vue analogue du boîtier de transmission dans une deuxième position,
- la figure 4 représente une vue de face du boîtier de transmission sans la paroi avant,
- la figure 5 représente une coupe suivant le plan V- V de la figure 2.

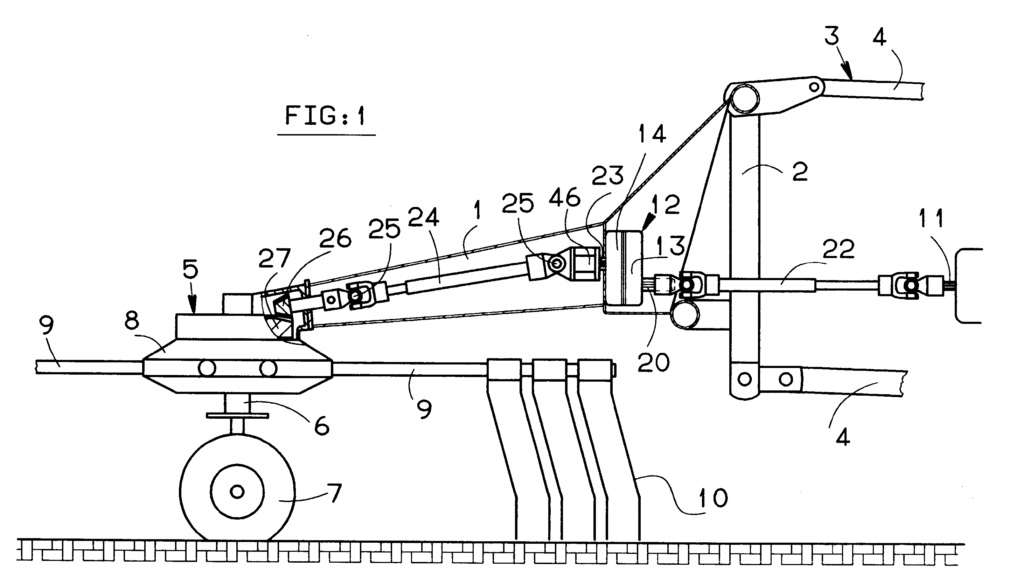

Comme cela ressort de la figure 1, l'invention sera décrite en liaison avec une machine de fenaison destinée à l'andainage de végétaux. Cette machine comporte notamment un châssis (1) en forme de poutre. A l'une de ses extrémités ledit châssis porte un chevalet d'accouplement (2) servant à atteler la machine au dispositif de relevage (3) d'un tracteur d'entraînement non représenté. La liaison entre la machine et le tracteur est assurée au moyen de bielles (4). Cet attelage peut se faire sur le côté arrière ou bien le côté avant du tracteur si celui-ci est équipé en conséquence.

A son autre extrémité, le châssis (1) porte un rotor (5) qui peut être entraîné en rotation durant le travail autour d'un axe central (6) sensiblement vertical. Cet axe (6) est lié au châssis (1) et porte à son extrémité inférieure des roulettes supports (7) qui roulent sur le sol au moins durant le travail. Le rotor (5) se compose d'un moyeu rotatif (8) qui porte des bras (9) qui s'étendent vers l'extérieur. Chacun de ces bras (9) porte des outils en forme de fourches (10) qui déplacent les végétaux couchés sur le sol. Lesdits bras (9) comportent aussi d'une manière connue en soi à leurs extrémités situées dans le moyeu (8), des manivelles pourvues de galets qui se déplacent dans une came de commande liée à l'axe central (6). Le chemin de roulement des galets dans cette came est tel que, sur la partie avant de leur trajectoire, les fourches (10) sont dirigées vers le bas et rassemblent les végétaux et que, sur la partie latérale de leur trajectoire, elles se lèvent et déposent les végétaux sous la forme d'un andain.

Sur cette machine la came de commande peut être tournée sur ou avec l'axe central (6) en fonction de la direction de déplacement. Ceci permet de régler la commande des bras de sorte que la partie de la trajectoire sur laquelle leurs outils (10) sont dirigés vers le bras se situe toujours à l'avant - vu dans le sens de déplacement-.

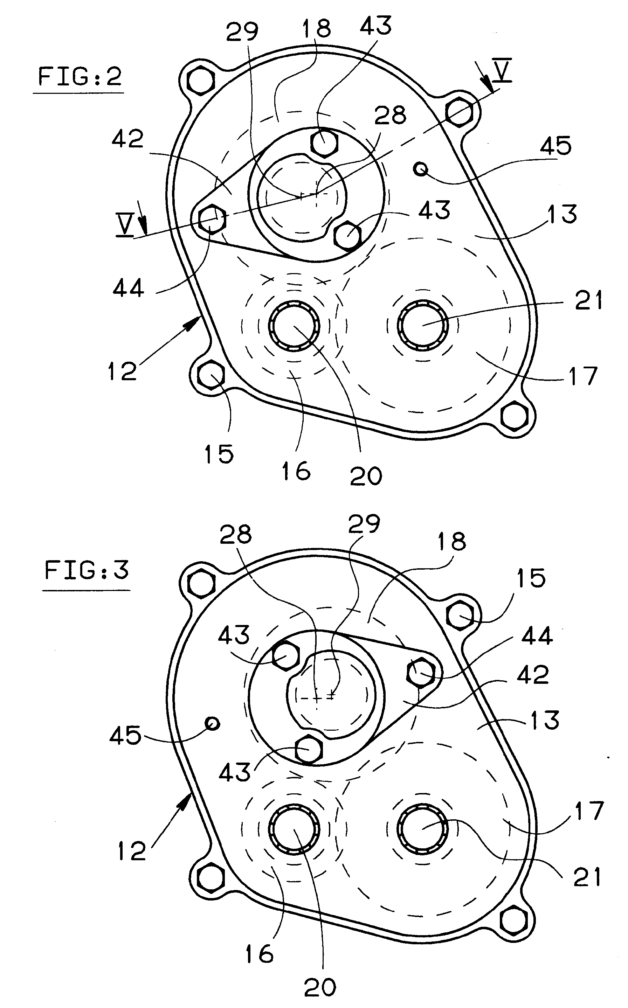

L'entraînement en rotation du rotor (5) est assuré à à partir de l'arbre de prise de force (11) du tracteur. Les moyens de transmission qui vont dudit arbre (11) jusqu'au rotor (5) sont partiellement logés dans le châssis (1). Ces moyens comprennent un boîtier de transmissiion (12) qui est vissé sur le châssis (1). Comme cela ressort notamment des figures 2 à 5, ce boîtier (12) est constitué par deux parois (13, 14) en forme de couvercles qui sont assemblées au moyen de boulons (15). Il renferme trois roues dentées (16, 17, 18). Deux de ces roues (16 et 17) sont situées côte à côte et engrènent entre elles. Elles possèdent des diamètres et des nombres de dents (19) différents et ce dans un rapport tel que lorsque la vitesse de rotation de la roue (16) qui a le plus petit nombre de dents (19) est de l'ordre de 1000 t/mn, la vitesse de l'autre roue dentée (17) est d'environ 540 t/mn. A titre d'exemple la roue dentée (16) comporte seize dents (19) et l'autre roue dentée (17) comporte vingt neuf dents (19). Ce rapport a été choisi parce qu'il permet de conserver la vitesse donnée par l'arbre de prise de force (11) si elle est de 540 t/mn ou bien de la réduire à cette valeur si la vitesse de l'arbre (11) est de 1000 t/mn. D'autres rapports pourraient être choisis si les arbres de prise deforce devaient tourner à des vitesses autres que celles sus citées. De même, on pourrait choisir d'autres rapports si les deux vitesses des arbres de prise de force devaient être ramenées à une autre vitesse pour l'entraînement du rotor.

Chacune de ces deux roues dentées (16, 17) est liée à un arbre d'entraînement (20, 21) s'étendant hors du boîtier (12). Ces arbres (20 et 21) sont guidés en rotation dans des alésages prévus dans les parois (13 et 14) au moyen de roulements à billes. L'extrémité de chaque arbre (20 et 21) qui se situe en-dehors du boîtier (12) peut être reliée à l'arbre de prise de force (11) du tracteur au moyen d'un arbre à cardans (22).

La troisième roue dentée (18) se situe au-dessus des deux autres roues (16 et 17). Elle comporte un arbre de sortie (23) qui s'étend hors du boîtier (12) sur le côté opposé à celui sur lequel se situent les arbres (20 et 21). Cet arbre de sortie (23) est relié au rotor (5) par l'intermédiaire d'un arbre de transmission (24) comportant des cardans (25) de manière à être articulé. L'extrémité de l'arbre de transmission (24) qui est dirigé vers le rotor (5) possède un pignon (26) qui coopère avec une couronne (27) solidaire du moyeu (8) du rotor (5). Le rapport entre le pignon (26) et la couronne (27) détermine en dernier lieu la vitesse de rotation du rotor (5).

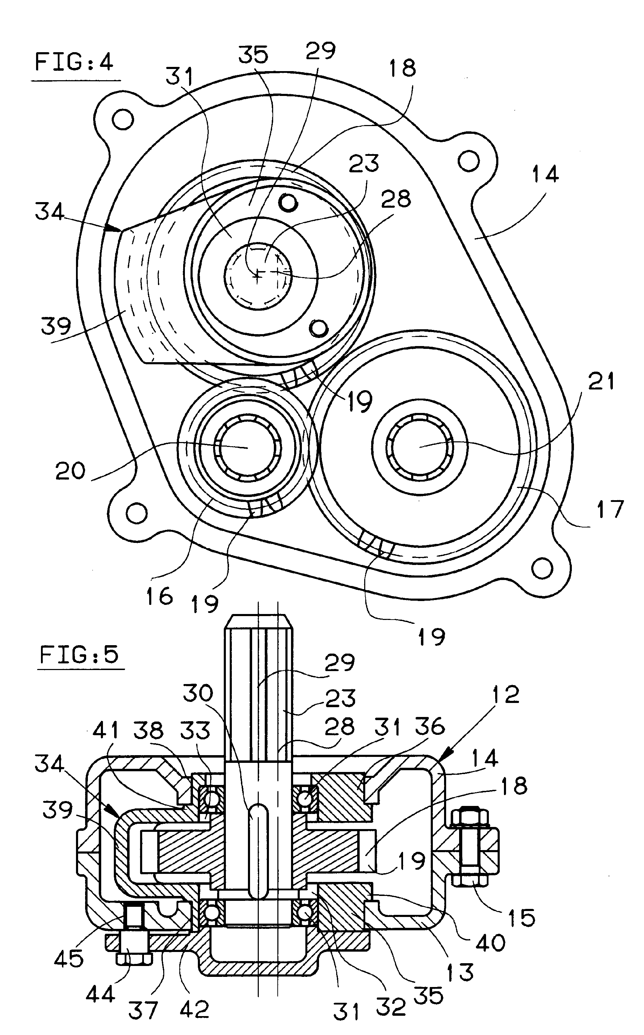

Ladite troisième roue dentée (18) peut être amenée en prise avec l'une ou l'autre des deux roues précitées (16 et 17) (voir figures 2 et 3). Pour cela elle peut être basculée d'environ 180° autour d'un axe géométrique (28) excentré par rapport à son axe de rotation géométrique (29). Comme cela ressort notamment des figures 4 et 5 elle est rendue solidaire de l'arbre de sortie (23) par une clavette (30). Cet arbre (23) est monté au moyen de roulements à billes (31) dans des alésages (32 et 33) d'un logement (34). Ce dernier se compose de deux bagues (35 et 36) qui sont elles mêmes guidées en rotation dans des alésages (37 et 38) prévus dans les parois (13 et 14). Ces deux bagues (35 et 36) sont reliées entre elles au moyen d'un pont (39) qui enjambe la roue dentée (18). Elles sont arrêtées dans le sens axial par des épaulements (40 et 41). On voit sur la figure 5 que les alésages (32 et 33) dans lesquels est guidé l'arbre (23) avec la roue dentée (18) sont excentrés par rapport aux pourtours extérieurs des bagues (35 et 36) et aux alésages (37 et 38) dans lesquels sont logées lesdites bagues . De ce fait une rotation de 180 ° de tout le logement (34) dans les alésages (37 et 38) autour de son axe géométrique (28) provoque un déplacement latéral suivant un arc de cercle de l'arbre (23) et de la roue dentée (18). Ce déplacement permet de mettre cette troisième roue dentée (18) en prise avec l'une ou l'autre des deux autres roues dentées (16 et 17).

Le logement (34) comporte également un levier de manoeuvre (42) qui se situe en dehors du boîtier (12). Ce levier (42) est fixé sur la bague (35) au moyen de deux vis (43). Il est en sus prévu une vis de blocage (44) qui permet d'arrêter le levier (42) et par conséquent le logement (34) dans les positions dans lesquelles la troisième roue dentée (18) est en prise avec l'une ou l'autre des deux roues dentées (16 et 17). Pour cela, la paroi (13) comporte deux trous taraudés (45) dans lesquels on peut introduire la vis de blocage (44).

Dans l'exemple représenté, la troisième roue dentée (18) qui est solidaire de l'arbre de sortie (23) a le même diamètre et le même nombre de dents (19) que la roue (17) solidaire de l'arbre d'entraînement (21). Le rapport entre la roue dentée (18) et les deux autres roues dentées (16 et 17) pourrait cependant être différent de celui indiqué ci-dessus. Ce rapport n'intervient pas pour l'harmonisation entre les deux régimes des arbres de prise de force des tracteurs.

Il ressort encore de la figure 1, qu'entre l'arbre de sortie (23) et le rotor (5) est prévu un limiteur de couple (46). Il est branché directement sur l'arbre (23) et est relié à l'arbre de transmission (24) à travers le cardan (25). Ce limiteur de couple (46) a pour fonction d'interrompre la transmission du mouvement d'entraînement entre l'arbre de prise de force (11) et le rotor (5) lorsque le couple devient trop important . Ceci peut se produire lorsqu' un bras (9) du rotor (5) rencontre un obstacle. Grâce à la disposition de ce limiteur de couple (46) après le boîtier de transmission (12) la vitesse à laquelle il tourne et son sens de rotation sont toujours pareils. Ceci lui permet d'être parfaitement efficace aussi bien lorsque l'arbre de prise de force (11) du tracteur utilisé tourne à 540 t/mn ou à 1000 t/mn.

Durant le travail, la machine est déplacée au moyen du tracteur. Le rotor (5) est alors entraîné en rotation à partir de l'arbre de prise de force (11) dudit tracteur. Dans le cas ou cet arbre (11) tourne à 540 t/mn il y a lieu de raccorder l'arbre à cardans (22) sur l'arbre d'entraînement (21) de la roue dentée (17). La troisième roue dentée (18), l'arbre de sortie (23) et l'arbre de transmission (24) tournent alors également à cette même vitesse.

Le sens de rotation de ladite troisième roue dentée (18) de l'arbre de sortie (23) de l'arbre de transmission (24) peut également être règlé de manière à faire tourner le rotor (5) dans le sens approprié. Ainsi, si l'arbre de prise de force (11) tourne dans le sens dans lequel doit tourner l'arbre de transmission (24) il y a lieu de faire engrèner la troisième roue dentée (18) avec la roue dentée (16) qui fera office de roue intermédiaire (voir figure 2). Par contre si, l'arbre de prise de force (11) tourne dans le sens contraire de celui dans lequel doit tourner l'arbre de transmission (24) il faut faire engrèner la troisième roue dentée (18) avec la roue dentée (17). Dans ce cas on obtient une inversion du sens de rotation (voir figure 3).

D'autre part, si l'arbre de prise de force (11) du tracteur tourne à 1000 t/mn il y a lieu de raccorder l'arbre à cardans (22) sur l'arbre d'entraînement (20) de la roue dentée (16). Cette roue dentée (16) entraîne alors à une vitesse réduite à 540 t/mn la troisième roue dentée (18). Cet entraînement de la troisième roue dentée (18) peut se faire soit directement soit par l'intermédiaire de la roue dentée (17) et ce en fonction du sens de rotation souhaité. Comme dans le cas précédent, on peut faire engrèner la troisième roue dentée (18) avec la roue dentée (16) si on veut inverser le sens de rotation donné par l'arbre de prise de force (11) du tracteur ou bien avec la roue dentée (17) si on veut conserver le même sens de rotation.

Ce boîtier (12) permet à l'utilisateur de règler par des manoeuvres extrêmement simples la vitesse et le sens de rotation du rotor (5) de sorte qu'il puisse animer la machine avec n'importe quel modèle de tracteur.

Il est bien évident que l'invention n'est pas limitée au mode de réalisation tel que décrit ci-dessus et représenté sur les dessins annexés. Des modifications restent possibles, notamment du point de vue de la constitution des divers éléments ou par substitution d'équivalents techniques sans pour autant sortir du domaine de protection tel que défini dans les revendications.

## Revendications

1. Machine agricole comportant notamment un châssis (1) supportant au moins un rotor (5) entraîné en rotation durant le travail autour d'un axe sensiblement vertical (6), lequel entraînement s'effectue à partir de l'arbre de prise de force (11) d'un tracteur, à travers un boîtier de transmission (12) équipé d'une première roue dentée (16) et d'une deuxième roue dentée (17) qui engrènent constamment entre elles et d'une troisième roue dentée (18) qui peut être amenée en prise avec la première roue dentée (16) ou avec la deuxième roue dentée (17) précitées, ladite première roue dentée (16) étant liée à un premier arbre (20) et ladite deuxième roue dentée (17) étant liée à un deuxième arbre (21), chacun de ces arbres (20 et 21) s'étendant hors du boîtier (12) et pouvant être relié à l'arbre de prise de force (11) du tracteur, caractérisée par le fait que la première roue dentée (16) et la deuxième roue dentée (17) possèdent des diamètres et des nombres de dents (19) différents, et que la troisième roue dentée (18) est munie d'un arbre de sortie (23) qui est relié au rotor (5), laquelle troisième roue dentée (18) est montée de manière excentrée dans un logement (34) qui est guidé en rotation dans des alésages (37 et 38) des parois (13 et 14) du boîtier (12) et qui peut être tourné dans ces alésages en vue d'amener la troisième roue dentée (18) en prise avec la première roue dentée (16) ou avec la deuxième roue dentée (17) précitées.

2. Machine selon la revendication 1, caractérisée par le fait que le nombre de dents (19) de la première roue dentée (16) qui est solidaire du premier arbre d'entrée (20) est inférieur au nombre de dents (19) de la deuxième roue dentée (17) qui est solidaire du deuxième arbre d'entrée (21) dans un rapport tel que lorsque sa vitesse de rotation est de l'ordre de 1000 t/mn la vitesse de rotation de la deuxième roue dentée (17) est d'environ 540 t/mn.

3. Machine selon la revendication 2, caractérisée par le fait que la première roue dentée (16) comporte seize dents (19) tandis que la deuxième roue dentée (17) comporte vingt neuf dents.

4. Machine selon l'une quelconque des revendications précédentes, caractérisée par le fait que la troisième roue dentée (18) peut être basculée d'environ 180° autour d'un axe (28) excentré par rapport à son axe de rotation (29).

5. Machine selon l'une quelconque des revendications précédentes, caractérisée par le fait que la troisième roue dentée (18) solidaire de l'arbre de sortie (23) et la deuxième roue dentée (17) solidaire du deuxième arbre d'entrée (21) ont le même diamètre et le même nombre de dents (19).

6. Machine selon l'une quelconque des revendications précédentes, caractérisée par le fait que le logement (34) est constitué par deux bagues (35 et 36) ayant des alésages (32 et 33) excentrés par rapport à leur pourtour et qui sont reliées entre elles au moyen d'un pont (39).

7. Machine selon la revendication 6, caractérisée par le fait que l'arbre de sortie (23) solidaire de la troisième roue dentée (18) est monté dans les alésages (32 et 33) des bagues (35 et 36) du logement (34) au moyen de roulements (31).

8. Machine selon l'une quelconque des revendications précédentes, caractérisée par le fait que le logement (34) peut être tourné dans les alésages (37 et 38) autour d'un axe géométrique (28) et peut être arrêté dans deux positions différentes.

9. Machine selon la revendication 8, caractérisée par le fait que le logement (34) comporte un levier de manoeuvre et de blocage (42).

10. Machine selon la revendication 9, caractérisée par le fait que le levier (42) est vissé sur la bague (35).

11. Machine selon la revendication 9, caractérisée par le fait que le levier (42) peut être immobilisé par rapport au boîtier (12) dans deux positions différentes, au moyen d'une vis (44).

12. Machine selon l'une quelconque des revendications précédentes, caractérisée par le fait qu'un limiteur de couple (42) se situe entre l'arbre de transmission (24) s'étendant jusqu'au rotor (5) et l'arbre de sortie (23) de la troisième roue dentée (18).

## Patentansprüche

1. Landmaschine, die insbesonders einen Rahmen (1) aufweist, der zumindest einen während der Arbeit um eine im wesentlichen vertikale Achse (6) in Drehung versetzten Rotor (5) trägt, wobei der Antrieb von der Zapfwelle (11) eines Traktors über ein Transmissionsgehäuse (12) erfolgt, das mit einem ersten Zahnrad (16) und einem zweiten Zahnrad (17), die ständig miteinander in Eingriff sind, und mit einem dritten Zahnrad (18) versehen ist, das mit dem ersten Zahnrad (16) oder mit dem zweiten Zahnrad (17) in Eingriff gebracht werden kann, wobei das erste Zahnrad (16) mit einer ersten Welle (20) und das zweite Zahnrad (17) mit einer zweiten Welle (21) verbunden ist, welche beiden Wellen (20 und 21) jeweils aus dem Gehäuse (12) hinausragen und mit der Zapfwelle (11) des Traktors verbunden werden können, dadurch gekennzeichnet, daß das erste Zahnrad (16) und das zweite Zahnrad (17) unterschiedliche Durchmesser und eine verschiedene Anzahl von Zähnen (19) besitzen und daß das dritte Zahnrad (18) mit einer mit dem Rotor (5) verbundenen Ausgangswelle (23) versehen ist, welches dritte Zahnrad (18) exzentrisch in einem Lager (34) montiert ist, welches drehbar in Bohrungen (37 und 38) der Wände (13 und 14) des Gehäuses (12) geführt ist und welches in diesen Bohrungen gedreht werden kann, um das dritte Zahnrad (18) in Eingriff mit dem ersten Zahnrad (16) oder mit dem zweiten Zahnrad (17) zu bringen.

2. Maschine nach Anspruch 1, dadurch gekennzeichnet, daß die Anzahl der Zähne (19) des an der ersten Eingangswelle (20) befestigten ersten Zahnrads (16) in einem solchen Verhältnis kleiner als die Anzahl der Zähne (19) des an der zweiten Eingangswelle (21) befestigten zweiten Zahnrads (19) ist, daß, wenn dessen Rotationsgeschwindigkeit im Bereich von 1000 U/min ist, die Rotationsgeschwindigkeit des zweiten Zahnrads (17) etwa 540 U/min ist.

3. Maschine nach Anspruch 2, dadurch gekennzeichnet, daß das erste Zahnrad (16) sechzehn Zähne (19) aufweist, während das zweitze Zahnrad (17) neunundzwanzig Zähne trägt.

4. Maschine nach irgendeinem der vorhergehenden Ansprüche, dadurch gekennzeichnet, daß das dritte Zahnrad (18) um etwa 180° um eine Achse (28) gekippt werden kann, die exzentrisch in bezug auf seine Rotationsachse (29) ist.

5. Maschine nach irgendeinem der vorhergehenden Ansprüche, dadurch gekennzeichnet, daß das an der Ausgangswelle (23) befestigte dritte Zahnrad (18) und das an der zweiten Eingangswelle (21) befestigte zweite Zahnrad (17) gleichen Durchmesser und gleiche Anzahl an Zähnen (19) haben.

6. Maschine nach irgendeinem der vorhergehenden Ansprüche, dadurch gekennzeichnet, daß das Lager (34) aus zwei Ringen (35 und 36) besteht, die in bezug auf ihren Umfang exzentrische Bohrungen (32 und 33) haben und die miteinander durch eine Brücke (39) verbunden sind.

7. Maschine nach Anspruch 6, dadurch gekennzeichnet, daß die am dritten Zahnrad (18) befestigte Ausgangswelle (23) in den Bohrungen (32 und 33) der Ringe (35 und 36) des Lagers (34) mittels Wälzlagern (31) montiert ist.

8. Maschine nach irgend einem der vorhergehenden Ansprüche, dadurch gekennzeichnet, dass das Lager (34) in den Bohrungen (37 und 38) um eine geometrische Achse (28) gedreht und in zwei verschiedenen Positionen festegestellt werden kann.

9. Maschine nach Anspruch 8, dadurch gekennzeichnet, daß das Lager (34) einen Betätigungs- und Feststellhebel (42) umfaßt.

10. Maschine nach Anspruch 9, dadurch gekennzeichnet, daß der Hebel (42) auf den Ring (35) geschraubt ist.

11. Maschine nach Anspruch 9, dadurch gekennzeichnet, daß der Hebel (42) in bezug auf das Gehäuse (12) mittels einer Schraube (44) in zwei verschiedenen Positionen festgelegt werden kann.

12. Maschine nach irgendeinem der vorhergehenden Ansprüche, dadurch gekennzeichnet, daß sich ein Drehmomentbegrenzer (42) zwischen der sich bis zum Rotor (5) erstreckenden Transmissionswelle (24) und der Ausgangswelle (23) des dritten Zahnrads (18) befindet.

## Claims

1. Agricultural machine comprising a frame (1) supporting at least one rotor (5) driven in rotation during work around an approximately vertical axis (6), said driving being performed from the power takeoff shaft (11) of a tractor vehicle through a transmission housing (12) provided with a first gear (16) and a second gear (17) which continually mesh and with a third gear (18) which can be intermeshed with the aforesaid first gear (16) or second gear (17), said first gear (16) being connected to a first shaft (20) and said second gear (17) being connected to a second shaft (21), each of these shafts (20 and 21) extending outside the housing (12) and being able to be connected to the power takeoff shaft (11) of the tractor vehicle, characterized in that the first gear (16) and the second gear (17) have different diameters and numbers of teeth (19) and that the third gear (18) is provided with an output shaft (23) which is connected to the rotor (5), said third gear (18) being eccentrically mounted in a casing (34) which is guided in rotation in bores (37 and 38) of the walls (13 and 14) of the housing (12) and can be rotated in these bores in order to intermesh the third gear (18) with the aforesaid first gear (16) or second gear (17).

2. Machine according to claim 1, characterized in that the number of teeth (19) of the first gear (16) which is integral with the first drive shaft (20) is smaller than the number of teeth (19) of the second gear (17) which is integral with the second drive shaft (21) according to a ratio such that when its speed of rotation is about 1000 rpm, the speed of rotation of the second gear (17) is about 540 rpm.

3. Machine according to claim 2, characterized in that the first gear (16) has sixteen teeth (19) while the second gear (17) has twenty-nine teeth.

4. Machine according to anyone of the preceding claims, characterized in that the third gear (18) can be rotated about 180° around an axis (28) which is eccentric relative to its rotational axis (29).

5. Machine according to anyone of the preceding claims, characterized in that the third gear (18) integral with the output shaft (23) and the second gear (17) integral with the second input shaft (21) have equal diameters and numbers of teeth (19).

6. Machine according to anyone of the preceding claims, characterized in that the casing (34) is made up of two rings (35 and 36) with bores (32 and 33) which are eccentric relative to their outer periphery and which are connected one to the other by a bridge (39).

7. Machine according to claim 6, characterized in that the output shaft (23) which is integral with the third gear (18) is mounted in the bores (32 and 33) of the rings (35 and 36) of the casing (34) by bearings (31).

8. Machine according to anyone of the preceding claims, characterized in that the casing (34) can be rotated in the bores (37 and 38) around a geometric axis (28) and can be stopped in two different positions.

9. Machine according to claim 8, characterized in that the casing (34) comprises an operating and stop lever (42).

10. Machine according to claim 9, characterized in that the lever (42) is screwed to the ring (35).

11. Machine according to claim 9, characterized in that the lever (42) can be stopped in two different positions with regard to the housing (12) by a screw (44).

12. Machine according to anyone of the preceding claims, characterized in that a torque limiter (46) is located between the transmission shaft (24) extending to the rotor (5) and the output shaft (23) of the third gear (18).
